# EUROPÄISCHE PATENTSCHRIFT

(11) **EP 0 820 691 B1**
(45) Veröffentlichungstag und Bekanntmachung des Hinweises auf die Patenterteilung: **29.08.2001**
(21) Anmeldenummer: 97110314.8
(22) Anmeldetag: 24.06.1997
(51) Int. Cl.: A01F 15/07

(54) **Rundballenpresse**
Roundbaler
Presse à balles rondes

(30) Priorität: 24.07.1996 DE 29612863 U
(43) Veröffentlichungstag der Anmeldung: 28.01.1998
(73) Patentinhaber: Kverneland Geldrop B.V., 5660 AA Geldrop (NL)
(72) Erfinder: Van den Wildenberg, Leonardus, 6021 CT Budel (NL)
(74) Vertreter: Grünecker, Kinkeldey, Stockmair & Schwanhäusser Anwaltssozietät

(56) Entgegenhaltungen:
- WO-A-92/05685
- DE-A- 4 426 034
- DE-U- 9 211 541
- US-A- 5 433 059

## Beschreibung

Die Erfindung betrifft eine Rundballenpresse gemäß dem Oberbegriff des Patentanspruchs 1.

Eine aus US-A-54 33 059 bekannte Rundballenpresse (Fig. 9 und 10) weist in der Startvorrichtung ein im Querschnitt J-förmiges Andrückelement auf, das nach der Verstellung aus der Ausgangsposition in die Startposition gegen die von Preßriemen auf Stützrollen gebildeten Mitnehmerfläche andrückbar ist, um das über Zuführwalzen bis zum Andrückelement gebrachte Bindematerial mittels der Mitnehmerfläche in die Preßkammer und zum Rundballen zu bringen. Die Verstellung des Andrückelementes erfolgt über einen Antrieb einer Schneidklinge, die zwischen den Zuführwalzen und dem Andrückelement angeordnet ist und das Bindematerial bei Bedarf in einem freien Schnitt abtrennt. Nach einem Schnitt bleibt das freie Ende des Bindematerials in seinem Bewegungsweg stromab der Zuführwalzen sich selbst überlassen. Daraus resultiert die Gefahr, daß der nächste Bindevorgang nicht ordnungsgemäß einleitbar ist. Mit dem freien Schnitt ist die Gefahr verbunden, daß das Bindematerial nicht ordnungsgemäß und sauber getrennt wird.

Bei einer aus DE-A-44 26 034 bekannten Rundballenpresse muß das Bindematerial von der Bindematerialrolle dem mit einer Preßwalze zusammenarbeitenden Andrückelement durch Zuführwalzen übergeben werden. Die Schneidklinge arbeitet mit freiem Schnitt zwischen den Zuführwalzen und dem Andrückelement. Nach einem Schnitt bleibt das freie Ende des Bindematerials sich selbst überlassen. Dadurch ist es schwierig, den nächsten Bindevorgang ordnungsgemäß einzuleiten. Bei beiden vorgenannten Rundballenpressen sind die Zuführwalzen unbedingt erforderlich, die jedoch Bauraum und einen aufwendigen Antriebsmechanismus erfordern.

Bei einer aus EP-A-0 432 830 bekannten Rundballenpresse ist in der Startvorrichtung ein Schnabel aus zwei federnden Platten gebildet, die das Bindematerial halten und führen. Eine Trennvorrichtung muß so weit vor dem Schnabel arbeiten, daß stets ein freies Bindematerialende entsteht, das relativ lang ist und sich deshalb leicht verhängt oder verlagert. Die relativ starke Klemmung im Schnabel, die das Rückrutschen des Bindematerials verhindern muß, bedeutet eine unerwünscht hohe mechanische Belastung für das Bindematerial während des Einbindens des Rundballens. Aufgrund des großen Schwenkhubs der Startvorrichtung benötigt diese unerwünscht viel Bauraum.

Weiterer Stand der Technik ist enthalten in DE-U-92 11 541 und WO 9205685.

Der Erfindung liegt die Aufgabe zugrunde, eine Rundballenpresse der eingangs genannten Art zu schaffen, die sich durch eine baulich einfache, kleinbauende und funktionssicher arbeitende Startvorrichtung auszeichnet.

Die gestellte Aufgabe wird mit den Merkmalen des Patentanspruchs 1 gelöst.

Das Andrückelement hält das freie Ende des Bindematerials bereit, um es zum Einleiten eines Bindevorgangs an die Mitnehmerfläche anzudrücken, die das Bindematerial sofort reibschlüssig mitnimmt und auch auf einem längeren Weg sicher in die Preßkammer zum Rundballen fördert. Deshalb kann die Startvorrichtung, falls dies zweckmäßig ist, weit entfernt vom Zuführspalt zur Preßkammer angeordnet sein. Es sind keine Zuführwalzen zum anfänglichen Fördern des Bindematerials erforderlich, da das Bindematerial stets am Andrückelement bleibt und vom Trennelement sicherbar ist. Das Andrückelement erfüllt auch die Funktion eines Umlenk- und Breithalteelements. Dadurch bleibt der Abzugswiderstand des Bindematerials wünschenswert gering. Das Andrückelement kann in Querrichtung durchgehend sein oder aus mehreren, z.B. kufen- oder zinkenartigen Abschnitten bestehen. Das mit dem Andrückelement kraftschlüssig kooperierende Trennelement ermöglicht eine wirksame und saubere Trennung des Bindematerials am Abschluß eines Bindevorgangs. Da - wie gesagt - keine Zuführwalzen erforderlich sind, die viel Bauraum beanspruchen und einen aufwendigen Antriebsmechanismus benötigen, ist es wichtig, daß das Trennelement nach dem Abtrennen des Bindematerials dessen freies Ende auf dem Andrückelement festhält, und dabei das Bindematerial und die Andruckfläche gegen einen zufälligen oder unkontrollierten Kontakt mit der weiterhin sich fortbewegenden Mitnehmerfläche abschirmt. Das Trennelement hat somit mehrere Funktionen, die die Zuverlässigkeit der Startvorrichtung verbessert. Die Startvorrichtung baut klein und kompakt.

Gemäß Anspruch 2 deckt das Trennelement die Andruckfläche und das darauf liegende Bindematerial gegenüber der Mitnehmerfläche ab. Dank der am unteren Rand des Trennelementes angeordneten Kante, mit der das Bindematerial sauber getrennt wird, wird mit dem Trennelement ein relativ langes Ende des Bindematerials auf der Andruckfläche für den nächsten Bindevorgang bereitgehalten und später wieder ohne Zuführwalzen in die Preßkammer gebracht.

Gemäß Anspruch 3 arbeitet das Widerlager mit dem Trennelement zusammen, um das Bindematerial abzutrennen. Das Widerlager ist zweckmäßigerweise so angeordnet, daß es in der Startposition nicht mit der Mitnehmerfläche in Eingriff kommt, oder die Förderbewegung des Bindematerials behindert. Eine Schneidkante kann vorgesehen sein, ist jedoch nicht unbedingt erforderlich. Es reicht eine verschleißarm und über lange Standzeiten arbeitende Klemmkante aus, um das Bindematerial im Zusammenspiel mit dem Andrückelement sauber abzutrennen bzw. durch die Förderkraft der Mitnehmerfläche im Klemmbereich abtrennen zu lassen.

Zweckmäßig kann sich gemäß Anspruch 4 die Andruckfläche zumindest über einen begrenzten Bewegungsbereich mit der Mitnehmerfläche bewegen, sobald ein Bindevorgang eingeleitet wird. Dies hat den Vorteil, einen anfänglichen starken Ruck im Bindematerial zu vermeiden, das aus dem Stillstand oftmals bis auf mehr als zwei m/s zu beschleunigen ist. Es ist denkbar, die Andruckfläche sich solange mit der Mitnehmerfläche mitbewegen zu lassen, wie die Andruckfläche gegen die Mitnehmerfläche gedrückt wird. In diesem Fall könnte das Andrückelement eine mitlaufende Rolle sein.

Gemäß Anspruch 5 wird durch die Form und Ausrichtung der Andruckfläche auf die in diesem Bereich im wesentlichen ebene Mitnehmerfläche eine großflächige und gleichförmige Anpressung des Bindematerials erreicht. Dabei ist es zweckmäßig, daß die Preßriemen zwischen den Stützrollen eine nachgiebige Mitnehmerfläche defnieren.

Gemäß Anspruch 6 sichert der verwindungssteife Querträger ein gleichmäßiges Andrücken der Andruckfläche an die Mitnehmerfläche. Es reicht ein kleiner Verstellhub aus, da die Mitnahmewirkung der Mitnehmerfläche sofort aufhört, wenn das Bindematerial von der Mitnehmerfläche freikommt, und weil dann ohnedies das Trennelement das Bindematerial abtrennt und auf der Andruckfläche festhält.

Der das Trennelement verstellende Arbeitszylinder hat gemäß Anspruch 7 eine Doppelfunktion, da er auch die Bewegung der Andruckfläche durchführt. Dies spart Bauraum und ermöglicht es, das Trennelement und die Andruckfläche nahe zueinander zu setzen.

Gemäß Anspruch 8 steuert die Druckstange die Bewegung der Andruckfläche einfach und funktionssicher. Die mechanische Kopplung könnte in beiden Richtungen gegen Federkraft erfolgen, so daß dadurch gegebenfalls die Andruckkraft begrenzbar ist Das Trennelement und die Andruckfläche bewegen sich bei dieser Bewegungssteuerung gegensinnig zueinander.

Um einen anfänglichen, gegebenenfalls kritischen Ruck im Bindematerial zu vermeiden, wird gemäß Anspruch 9 die Bewegung der Mitnehmerfläche zusätzlich benutzt, um die Bindematerialrolle, zumindest am Beginn eines Zuführvorgangs, in Lieferrichtung drehanzutreiben. Dadurch wird das Bindematerial der Aufgabe enthoben, die gegebenenfalls große Massenträgheit der Bindematerialrolle zu überwinden.

Gemäß Anspruch 10 übernimmt der Verstellantrieb der Startvorrichtung auch die Aufgabe, die Bindematerialrolle, zumindest anfänglich, an die Mitnehmerfläche anzudrükken.

Gemäß Anspruch 11 werden die Bindematerialrolle und das Andrückelement gemeinsam und indirekt über den Verstellantrieb des Trennelementes verschwenkt. Die zum Verschwenken des Andrückelements wirksame Feder begrenzt die Andruckkraft für das Andrückelement und ermöglicht es andererseits, die Bindematerialrolle unabhängig von ihrem momentanen Durchmesser an die Mitnehmerfläche anzudrücken. Es wäre denkbar, zum Andrücken der Bindematerialrolle und des Andrückelementes Federn einzusetzen und ohne festen Anschlag zu arbeiten oder einen eigenen Verstellantrieb vorzusehen.

Gemäß Anspruch 12 wird ein funktionssicherer und wartungsarmer Betrieb gewährleistet, da das Bindematerial von der Klemmkante zwischen den Nutwänden und gegebenenfalls auch auf dem Nutgrund festgeklemmt wird. Einer Klemmung an den Nutwänden ist der Vorzug zu geben, weil dies zu einer Fluchtungsfehler oder geringfügige Abweichungen tolerierenden Selbstkompensation führt. Ferner wird die Klemmkante in der Quernut geführt und abgestützt, so daß sich ein über die Breite gleichförmiger Trenneffekt einstellt. Der Trennvorgang kann durch den z.B. stumpfen Umlenkrand unterstützt werden, über den das Bindematerial bis zur Trennung umgelenkt wird. Dieser Umlenkrand könnte sogar schneidenartig ausgebildet sein, um den Trennvorgang zu begünstigen.

Gemäß Anspruch 13 fördert die Mitnehmerfläche das Bindematerial entlang der Führung bis in die Preßkammer. Zweckmäßigerweise läßt sich zur Verschleißminderung die Führung, zumindest bereichsweise, von der Mitnehmerfläche abheben. Die Startvorrichtung kann weit vom Zuführspalt zur Preßkammer entfernt angeordnet sein, ohne das ordnungsgemäße Einleiten eines Bindevorgangs zu gefährden.

Die Ausbildung gemäß Anspruch 14 ist besonders bedeutsam. Das bandförmige Bindematerial kann nämlich unter dem Förderzug die Tendenz entwickeln, sich zu verschmälern oder die Seitenränder umzulegen. Die Breitstreckvorrichtung beseitigt diese Tendenz und breitet das Bindematerial aus. Die Breitstreckvorrichtung läßt sich am Andrückelement und/oder an zwischen der Bindematerialrolle und dem Andrückelement angeordneten Umlenkelementen vorsehen.

Gemäß Anspruch 15 wird die Breitreckvorrichtung vom Umlenkrand des Andrückelementes selbst gebildet.

Wenigstens ein gemäß Anspruch 16 vorgesehener Führungsvorsprung, der am Andrückelement vorgesehen ist, jedoch auch stromauf desselben an Umlenkelementen vorgesehen sein kann, sorgt für eine präzise Ausrichtung des Bindematerials beim Einlauf. Er verhindert ein seitliches Verlaufen des Bindematerials. Zweckmäßig sind an beiden Seiten Führungsvorsprünge vorgesehen.

Anhand der Zeichnung werden Ausführungsformen des Erfindungsgegenstandes erläutert. Es zeigen:
- Fig. 1: schematisch einen Schnitt einer Rundballenpresse in einer zur Achse der Preßkammer senkrechten Ebene,
- Fig. 2,3,4: Detailschnitte zu Fig. 1 in unterschiedlichen Betriebsphasen, wobei Fig. 2 den Start eines Bindevorgangs, Fig. 3 einen laufenden Bindevorgang und Fig. 4 das Ende eines Bindevorgangs, schematisch repräsentieren,
- Fig. 5: einen Teilschnitt einer anderen Ausführungsform einer Rundballenpresse,
- Fig. 6A,B: zwei Detailvarianten im Schnitt,
- Fig. 7: eine weitere Detailvariante in einem schematischen Schnitt,
- Fig. 8: eine weitere Detailvariante,
- Fig. 9: eine weitere Detailvariante, und
- Fig. 10,11: Perspektivansichten von Startvorrichtungen.

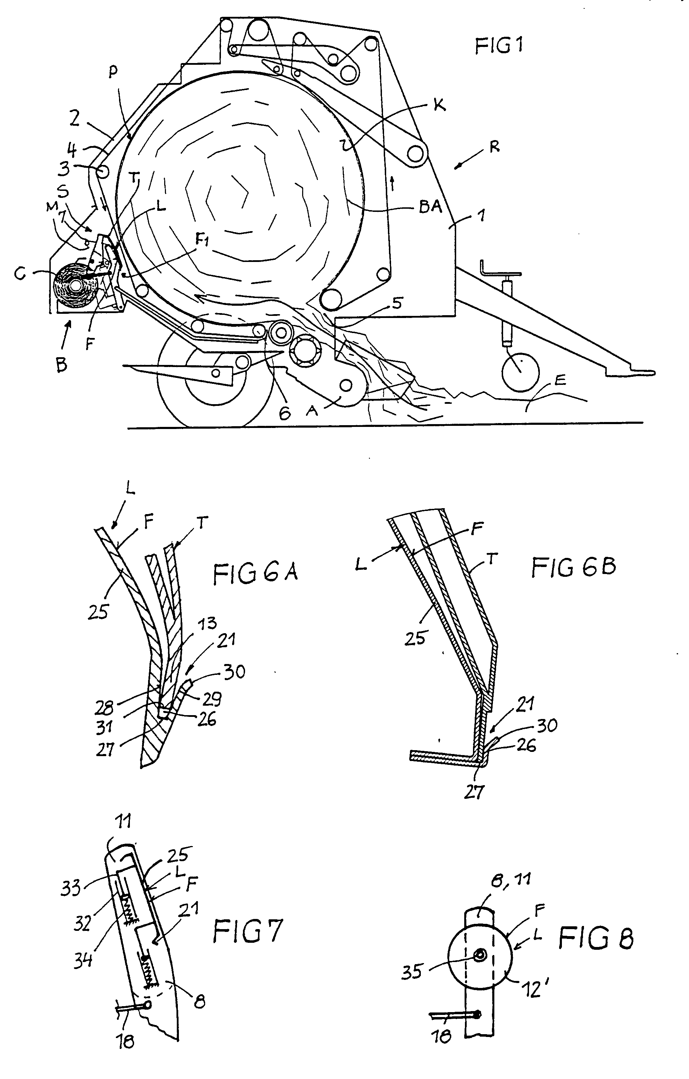

Eine Rundballenpresse R weist in Fig. 1 in einem Gehäuse 1 eine von Preßelementen P begrenzte Preßkammer K auf,. Die Preßelemente P sind mehrere, nebeneinanderliegend auf Stützrollen 3 abgestützte und in Pfeilrichtung angetriebene Preßriemen 4 aus elastischem Material mit reibungsaktiver Oberfläche. Am Gehäuse 1 nimmt eine Pick-up-Vorrichtung A Emtegut E vom Boden auf und liefert dieses durch eine Zuführöffnung 5 in die Preßkammer K. Z.B. in der Nähe der Zuführöffnung 5 ist ein Einführspalt 6 für bahnförmiges Bindematerial M vorgesehen, vorzugsweise eine Netz- oder Folienbahn oder dgl. Am Gehäuse 1 ist schwenkbar eine Klappe 2 angelenkt, an der unten eine Bindevorrichtung B angeordnet ist. Von der Bindevorrichtung B erstreckt sich eine als abgewinkeltes Leitblech 24' ausgebildete Führung G bis zum Einführspalt 6. Die Führung G ist an eine von den Preßriemen 4 definierte Mitnehmerfläche andrückbar, um das Bindematerial M durch den Einführspalt 6 in die Preßkammer K zu fördern, in der es vom Rundballen BA und den Preßriemen 4 mitgenommen wird, wobei sich der Rundballen BA in mehreren Windungen in das Bindematerial einbindet.

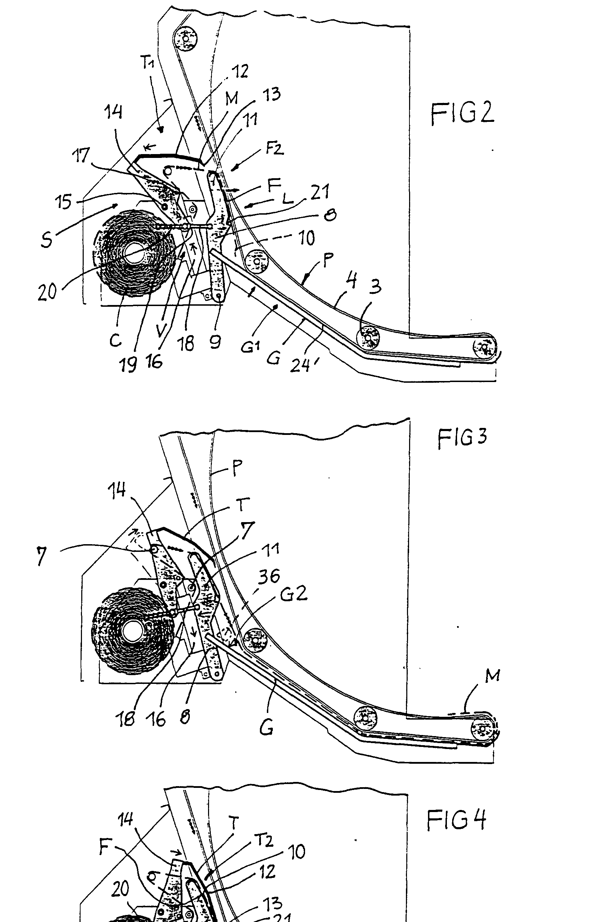

Das Bindematerial M verläuft in der Bindevorrichtung B (Fig. 1 bis 4) von einer Vorratsrolle C, ggfs. über Umlenkelemente 7, und eine Andruckfläche F eines Andrückelements L einer Startvorrichtung S zur Führung G. Es wird zum Abschluß eines Bindevorgangs mittels eines Trennelementes T abgetrennt. Die Andruckfläche F ist zwischen einer Ausgangsposition F1 (Fig. 1) und einer Startposition (Fig. 2) F2 schwenkbar. In der in Fig. 1 gezeigten Ausgangsposition übergreift das Trennelement T, (in seiner Trennstellung T2), die Andruckfläche F und das darauf plazierte Bindematerial M von oben. Die Andruckfläche F ist der Mitnehmerfläche der Preßelemente P zugewandt, ist in etwa zu dieser parallel und erstreckt sich zumindest über die Breite des Bindematerials M. parallel zur Achse der Preßkammer K. In der Ausgangsposition F1 sind die Andruckfläche F und das in der Trennstellung befindliche Trennelement T von der Mitnehmerfläche der Preßelemente P abgehoben. Das freie Ende des Bindematerials M ist zwischen der Andruckfläche F und dem Trennelement T gesichert und dem Eingriff der Mitnehmerfläche entzogen.

In Fig. 2 ist die Andruckfläche F, die konvex ausgebildet sein kann, in einem verwindungssteifen, das Andrückelement L bildenden Querträger 11 angeordnet, der an Schwenkarmen 8 um eine stationäre Achse 9 schwenkbar ist. Das freie Ende des Bindematerials M ist mit 10 bezeichnet. Zur Verstellung der Andruckfläche F zwischen der Ausgangsposition F1 (Fig. 1) und der Startposition F2 (Fig. 2) dient ein Schwenkverstellantrieb V, der entweder direkt an den Schwenkarmen 8 oder am Querträger 11 angreift, oder - wie bei der gezeigten Ausführungsform - die Andruckfläche F indirekt mittels des Trennelementes T verstellt.

Das Trennelement T weist wenigstens eine verwindungssteife und annähernd parallel zur Achse der Preßkammer verlaufende Blechplatte 12 auf, die in einem Blechstreifen 13 ausläuft und an Schwenkarmen 14 befestigt ist, die um eine stationäre Achse 15 schwenkbar sind. An zumindest einem Schwenkarm 14 greift ein Arbeitszylinder 16 an, um das Trennelement T zwischen der in Fig. 2 gezeigten Ruheposition T1 und der in Fig. 1 gezeigten Trennposition T2 hin- und herzuverschwenken. In der Ruheposition T1 ist das Trennelement T nach oben über die Andruckfläche F hinweg zurückgezogen. Zwischen den Schwenkarmen 14 und den Schwenkarmen 8 ist (z.B. pro Seite) eine bewegungsübertragende, mechanische Kopplung vorgesehen, z.B. eine Druckstange 18, die an den Schwenkarmen 8 und 14 angelenkt ist. Die Druckstange 18 trägt (Fig. 3) einen Anschlag 19 (um die Andruckfläche F gegen die Mitnehmerfläche zu pressen), und eine Feder 20, über die die Andruckfläche F in die Ausgangsposition F1 gegen einen Begrenzungsanschlag 41 (Fig. 4) verstellbar ist. Die Feder 20 gestattet es, bei in der Ausgangsposition F1 angelangter Andruckfläche F das Trennelement bis in die Trennstellung T2 zu verschwenken.

Die Führung G ist zwischen einer in Fig. 2 gezeigten Führstellung G1 und einer zumindest bereichsweise abgehobenen Entlastungsstellung G2 mittels einer Verstellantriebs 36 verstellbar. Gegebenenfalls ist die Führung G mittels des Schwenkverstellantriebs V für die Andruckfläche F verstellbar (nicht gezeigt).

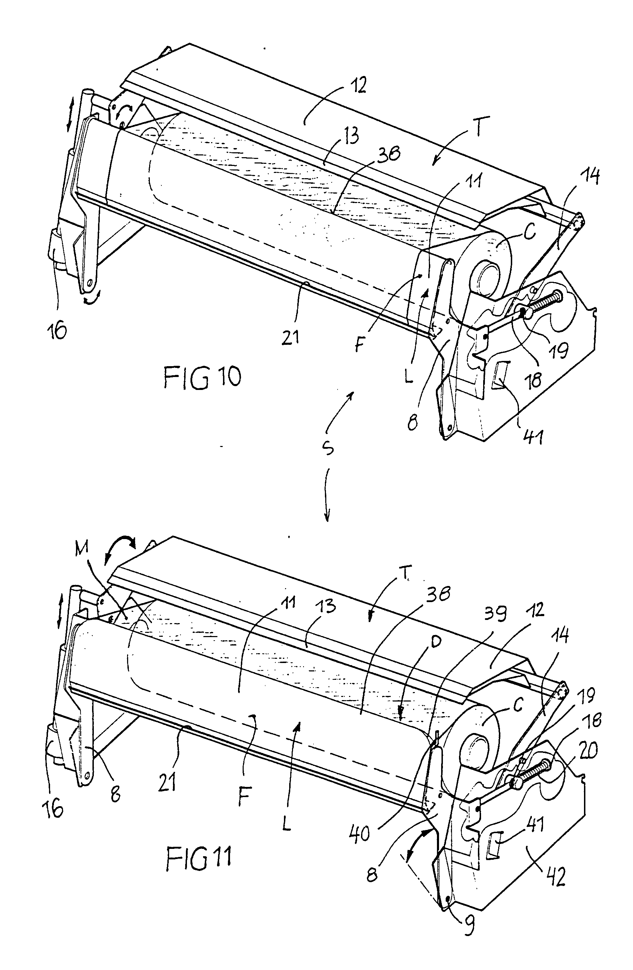

In Fig. 1 ist der Rundballen BA fertig gewickelt. Das freie Ende 10 des Bindematerials M ist zwischen dem Trennelement T und der Andruckfläche F geborgen. Zum Einleiten eines Bindevorgangs wird der Arbeitszylinder 16, vorzugsweise ein elektromotorisches Antriebsaggregat (es können an beiden Seiten der Bindevorrichtung Arbeitszylinder 16 vorgesehen sein), ggfs. auch ein Hydraulik- oder Pneumatikzylinder, ausgefahren, damit die Schwenkarme 14 um die Achse 15 entgegen dem Uhrzeigersinn schwenken. Durch die Druckstangen 18 und die Anschläge 19 werden die Schwenkarme 8 um die Achse 9 im Uhrzeigersinn verschwenkt, bis die Andruckfläche F das Bindematerial M bzw. das freie Ende 10 gegen die Mitnehmerfläche drückt (Stellung in Fig. 10). Da die Andruckfläche F einen wesentlich geringeren Reibungswiderstand für das Bindematerial hat als die Mitnehmerfläche, wird das Bindematerial sofort in Bewegungsrichtung der Mitnehmerfläche weitergefördert, bis es in den Einlaufspalt zwischen der Führung G und der Mitnehmerfläche einläuft und schließlich vom Rundballen BA mitgenommen wird. Die Andruckfläche F kann weiterhin an die Mitnehmerfläche angedrückt bleiben. Es ist aber auch denkbar, bereits dann den Arbeitzylinder 16 etwas einzufahren (Fig. 4), so daß das Trennelement T oben über die Andruckfläche F greift und durch die Druckstange 18 die Schwenkarme 8 gegen den Uhrzeigersinn verschwenkt sind. Dadurch kommt die Andruckfläche F außer Eingriff mit der Mitnehmerfläche und gelangt der Schwenkarm an einen Begrenzungsanschlag 41 (Fig. 4, 10). Das Andrückelement L fungiert dann mit einem Umlenkrand 38 als Breithalter. In Fig. 3 kann auch die Führung G zumindest bereichsweise von der Mitnehmerfläche abgehoben sein. Dadurch wird der Bewegungswiderstand für das Bindematerial trotz des relativ großen Abstands zwischen der Vorratsrolle C und dem Einführspalt 6 gering.

Ist nach mehreren Umwindungen des Rundballens BA der Bindevorgang abzuschließen, dann werden die Arbeitszylinder 16 eingefahren und wird das Trennelement T in die Trennstellung T2 verschwenkt, in der es mit einem Widerlager 21 an der Andruckfläche F oder am Querträger 11 zusammenarbeitet und das Bindematerial M einklemmt und/oder abtrennt (Fig. 4). Die Komponenten der Bindevorrichtung verbleiben zunächst in der Stellung gemäß Fig. 4. Danach wird die Auswurfklappe 2 geöffnet und der eingebundene Rundballen BA ausgeworfen.

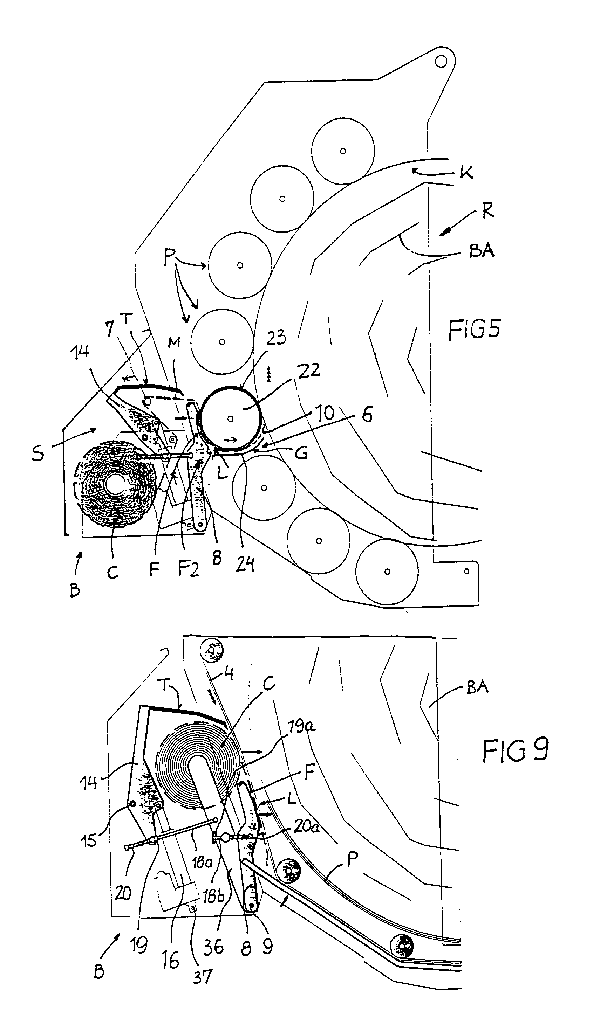

Die Rundballenpresse R in Fig. 5 unterscheidet sich von den vorhergehenden Ausführungsformen dadurch, daß die Preßkammer K ohne Preßriemen durch angetriebene Preßwalzen 22 begrenzt wird, die in diesem Fall die Preßelemente P definieren. Die Bindevorrichtung B der Fig. 5 stimmt weitgehend mit der Bindevorrichtung B der vorhergehenden Ausführungsformen überein. Im Unterschied ist die Andruckfläche F des Andrückelements L der Oberfläche der Preßwalze 22 entsprechend konkav geformt, um einen großen Anlagebereich zu bilden. Die Führung G ist ein gewölbtes Leitblech 24, das sich durch die Einführöffnung 6 bis nahe zum Umfang des Rundballens BA erstreckt und verhindert, daß sich das freie Ende 10 um die untere Preßwalze wickelt. Gegebenenfalls ist die Führung G für die Anfangsphase des Bindevorgangs an die Preßwalze 22 andrückbar (nicht gezeigt). Zweckmäßigerweise ist zumindest die Preßwalze 22 mit einem reibungsaktiven Oberflächenbelag 23 (z.B. aus Gummi oder einem Elastomer) versehen, um eine effektive Förderung des Bindematerials zu gewährleisten. In Fig. 5 befindet sich die Andruckfläche F in der Startposition F2. Die Funktion der Startvorrichtung entspricht der der vorhergehenden Ausführungsformen.

Fig. 6A verdeutlicht, daß die Andruckfläche F der Ausführungsformen gemäß den Fig. 1 bis 4 an wenigstens einer stabilen Blechplatte 25 angeordnet ist, an der als Widerlager 21 eine sich V-förmig öffnende Quemut 26 vorgesehen ist, in die der Blechstreifen 13 eintaucht. Die Quemut 26 besitzt einen Nutgrund 27, von dem divergierende Nutwände 28 und 29 ausgehen. Die Nutwand 29 endet in einem nach außen gebogenen Umlenkrand 30, der entweder schneidenartig oder stumpf (wie gezeigt) ausgebildet ist. Der Blechstreifen 13 besitzt eine stumpfe Endkante 31, mit der das Bindematerial M in der Quemut 26 festklemmbar ist. Zweckmäßigerweise ist die Stärke des Blechstreifens 13 größer als die Breite des Nutgrundes 27, so daß die Endkante 31 mit den Nutwänden 28 und 29 auch dann ordnungsgemäß zusammenarbeitet, wenn sich die Endkante 31 nicht sauber auf den Nutgrund 27 aufsetzen sollte.

In Fig. 6B paßt der Blechstreifen 13 in die Quemut 26, so daß er direkt auf den Nutgrund 27 aufsetzbar ist. In beiden Fig. 6A, 6B ist die verwindungssteife, stabile Ausbildung der Abdeckplatte 12 und auch der Blechplatte 25 angedeutet.

Bei den vorhergehenden Ausführungsformen ist das Andrückelement L bzw. die Andruckfläche F in Bewegungsrichtung der Mitnehmerfläche stationär abgestützt.

In Fig. 7 (Alternative zur Ausführungsform der Fig. 1 bis 4) ist die Andruckfläche F im Querträger 11 und/oder in den Schwenkarmen 8 begrenzt in Bewegungsrichtung der Mitnehmerfläche verschiebbar. Zu diesem Zweck sind Schiebeführungen 32 vorgesehen, in die auf Federn 34 abgestützte Führungselemente 33 der Andruckfläche F (bzw. der Blechplatte 25) eingreifen. Fig. 7 verdeutlicht die Ausgangsposition der Andruckfläche F. Wird diese - wie beschrieben - an die Mitnehmerfläche angedrückt, so läßt sie sich unter der Reibung des Bindematerials gegen die Kraft der Federn 34 über einen begrenzten Bewegungsbereich verschieben (leichtere und schonende anfängliche Mitnahme des Bindematerials). Sobald die Andruckfläche F wieder von der Mitnehmerfläche abgehoben worden ist, drücken die Federn 34 die Andruckfläche F in die gezeichnete Ausgangsposition zurück.

In Fig. 8 ist die Andruckfläche F vom Umfang einer Rolle 12' gebildet, die an den Schwenkarmen 8 oder im Querträger 11 (nicht gezeigt) in Drehlagerungen 35 gelagert ist. Der Rolle 12' ist zweckmäßigerweise ein nicht gezeigter Abstreifer zugeordnet, um ein Umwickeln des Bindematerials zu verhindern. Das Trennelement (in Fig. 8 nicht gezeigt) arbeitet entweder mit der Rolle 12' zusammen oder mit einem nicht dargestellten, stationären Widerlager. Zweckmäßigerweise ist für die Rolle 12' ein Freilauf oder eine Rücklaufsperre vorgesehen, um zu verhindern, daß sich die Rolle 12' zurückdrehtt.

In Fig. 1 bis 7 kann die Andruckfläche oberflächlich mit einer gleitfreudigen Beschichtung (z.B. Teflon) versehen sein, um dem Bindematerial M einen möglichst geringen Gleitwiderstand zu bieten. Das Trennelement (Platte 12) könnte unterseitig ein Druckkissen aufweisen, um in der Trennstellung T2 das freie Ende 10 des Bindematerials M kraftschlüssig auf der Andruckfläche F zu sichern. Der Trennvorgang des Bindematerials kann durch Abschneiden oder durch Klemmen und Abreißen unter dem vom Rundballen ausgeübten Zug erfolgen.

In Fig. 9 ist auch die Bindematerialrolle C durch die Mitnehmerfläche (Riemen 4) der Preßelemente P antreibbar. Zu diesem Zweck ist die Bindematerialrolle C in einem Rahmen 36 gelagert, der (beispielsweise) um das stationäre Schwenklager 9 der Schwenkarme 8 zwischen einer Stellung, in der die Bindematerialrolle C an die Mitnehmerfläche angedrückt ist (Fig. 9), und einer davon abgehobenen Stellung (nicht gezeigt) schwenkbar ist. Zur Schwenkverstellung der Bindematerialrolle C kann der Verstellantrieb der Startvorrichtung S verwendet werden. In diesem Fall ist eine erste Druckstange 18a schwenkbar am Rahmen 36 und am unteren Ende des Schwenkarms 14 (der um die Schwenkachse 15 schwenkt) angelenkt, die den festen Anschlag 19 und die Feder 20 trägt. Bei Ausfahren des Arbeitszylinders 16 drückt der Anschlag 19 den Rahmen 36 in Fig. 9 nach rechts. Beim Einziehen des Arbeitszylinders 16 wird der Rahmen 36 über die Feder 20 von der Mitnehmerfläche abgehoben. Eine zweite Druckstange 18b koppelt den Rahmen 36 mit dem Schwenkarm 8, um in etwa synchron auch das Andrückelement L gegen die Mitnehmerfläche anzudrücken. Auf der zweiten Druckstange 18b sind ein fester Anschlag 19a und eine weitere Feder 20a angeordnet. Die Feder 20a wirkt in Andruckrichtung des Andrückelements L, um das Andrücken der Bindematerialrolle C unabhängig von deren momentanen Durchmesser zu ermöglichen. Der feste Anschlag 19a zieht den Schwenkarm 8 beim Einziehen des Arbeitszylinders 16 gegen den Uhrzeigersinn zurück. Anstelle des festen Anschlags 19a könnte eine zweite Feder vorgesehen sein. Femer ist es möglich, die Bewegung des Andrückelementes L direkt über eine Druckstange zu steuern, die den Schwenkarm 8 mit dem Schwenkarm 14 verbindet, etwa wie in Fig. 1. Die Variante gemäß Fig. 9 könnte auch bei der Startvorrichtung gemäß Fig. 5 verwendet werden, um die Bindematerialrolle C entweder an die Preßwalze 22 oder an eine andere der ebenfalls angetriebenen Preßwalzen anzudrücken.

Fig. 10 ist eine Perspektivansicht der Startvorrichtung etwa gemäß den Fig. 1 bis 4. Anstelle eines festen Anschlags 19 auf der Druckstange 18 könnte eine Feder verwendet werden, mit der die Andruckkraft des Andrückelementes L gegen die Mitnehmerfläche begrenzt wird.

In Fig. 11 ist eine Breitstreckvorrichtung D für das Bindematerial M angedeutet. Die Breitstreckvorrichtung D weist am Umlenkrand 38 des Andrückelementes L in Bewegungsrichtung der Mitnehmerfläche zurückweichende Endbereiche 39 auf, die dazu führen, daß das Bindematerial unter dem Lieferzug in Querrichtung aufgebreitet und auseinandergespannt wird. Die Endbereiche 39 können gerundet zurückweichen. Es ist aber auch eine schräg abfallende Ausbildung der Endbereiche möglich, so daß ein dachförmiger Umlenkrand 38 entsteht. Zusätzlich ist in Fig. 11 ein Führungsvorsprung 40 angedeutet, der zumindest an einem Endbereich des Umlenkrandes 38 vorgesehen sein sollte, um ein seitliches Verlaufen des Bindematerials M zu verhindern.

Die Breitstreckvorrichtung D könnte auch an einem der Umlenkelemente 7 (Fig. 3) ausgebildet werden, z.B. indem das oberste Umlenkelement 7 ähnlich dem Umlenkrand 38 mit seinem Endbereichen 39 der Fig. 11 gebogen oder sogar dach- oder pfeilförmig ist. Der Führungsvorsprung 40 könnte an einem der Umlenkelemente 7 in Fig. 3 vorgesehen sein. Zweckmäßigerweise sind an beiden Seiten des Bindematerials Führungsvorsprünge 40 vorgesehen. Die Breitstreckvorrichtung D könnte auch in Fig. 5 am Andrückelement L und/oder an einem der Umlenkelemente 7 vorgesehen sein. Ähnlich dem Begrenzungsanschlag 41 für wenigstens einen der Schwenkarme 8 (Fig. 10) könnte für den Rahmen 36 in Fig. 9 ein Begrenzungsanschlag vorgesehen werden, um das Andrückelement L und die Bindematerialrolle C in den Ruhepositionen stabil abzustützen, sobald das Trennelement in die Trennstellung verschwenkt wird.

## Patentansprüche

1. Rundballenpresse (R), mit einer durch antreibbare Presselemente (P) wie Presswalzen (22) oder Pressriemen (4) begrenzten Presskammer (K) und einer Bindevorrichtung (B) zum Einbinden des Rundballens (BA) in bahnförmiges Bindematerial (M), wobei die Bindevorrichtung (B) eine zwischen einer Startposition (F2) und einer Ausgangsposition (F1) verstellbare Startvorrichtung (S) aufweist, in der ein Andrückelement (L) mit einer Andrückfläche (F) und ein Trennelement (T) vorgesehen sind, von denen das Andrückelement (L) in der Startposition (F2) der Startvorrichtung (S) das Bindematerial (M) mit der Andrückfläche (F) zum Einleiten eines Bindevorgangs direkt gegen eine Mitnehmerfläche eines Presselements (P) anpresst, während in der Ausgangsposition (F1) die Andrückfläche (F) von der Mitnehmerfläche des Presselements (P) abgehoben ist, und von denen das Trennelement (T) mittels eines Antriebs relativ zum Andrückelement (L) zwischen einer Ruhestellung (T1) und einer Trennstellung (T2) bewegbar ist, **dadurch gekennzeichnet,** dass das Trennelement (T) an der der Mitnehmerfläche abgewandten Seite des Andrückelements (L) gelagert ist und in seiner Trennstellung (T2) in Förderrichtung des Bindematerials (M) das Andrückelement (L) und das darauf liegende Bindematerial (M) übergreift, und dass das Trennelement (T) in der Trennstellung (T2) am Andrückelement (L) zum kraftschlüssigen Angriff bringbar ist.

2. Rundballenpresse nach Anspruch 1, **dadurch gekennzeichnet,** dass das Trennelement (T2) ein in der Trennstellung (T2) die Andrückfläche (F) von oben übergreifendes Abdeckelement für das Bindematerial (M) bildet, und dass am Trennelement (T), vorzugsweise an dessen unterem Rand (13), eine Schneid- oder Klemmkante (31) angeordnet ist.

3. Rundballenpresse nach Anspruch 2, **dadurch gekennzeichnet,** dass am Andrückelement (L) ein querliegendes Widerlager (21) für die Schneid- oder Klemmkante (31) vorgesehen ist, und dass das Widerlager (21) eine annähernd V-förmige, sich entgegengesetzt zur Bewegungsrichtung der Mitnehmerfläche öffnende Quernut (26) ist.

4. Rundballenpresse nach Anspruch 1, **dadurch gekennzeichnet,** daß die Andruckfläche (F) zumindest über einen begrenzten Bewegungsbereich in etwa in Bewegungsrichtung der Mitnehmerfläche bewegbar gelagert ist.

5. Rundballenpress nach wenistens einem der Ansprüche 1 bis 4, **dadurch gekennzeichnet,** daß die Preßelemente (B) mehrere, nebeneinanderliegend auf Stützrollen (3) gelagerte, vorzugsweise reibungsaktive, Preßriemen (4) sind, die die der Andruckfläche gegenüberliegende, in etwa geradlinig verlaufende Mitnehmerfläche bilden, und daß die Andruckfläche (F) zur Mitnehmerfläche und in Richtung der Preßkammerachse gesehen, leicht konvex ist.

6. Rundballenpresse nach Anspruch 1, **dadurch gekennzeichnet,** daß das Andrückelement (L) ein verwindungssteifer Querträger (11), vorzugsweise aus mindestens einer Blechplatte (12), ist, der sich zwischen zwei seitlichen, stationär gelagerten Schwenkarmen (8) erstreckt, und daß an zumindest einem Schwenkarm (8) oder dem Querträger (11) ein Schwenkverstellantrieb (V) direkt oder indirekt angreift.

7. Rundballenpresse nach Anspruch 1, **dadurch gekennzeichnet,** daß das Trennelement (T) mittels eines Arbeitszylinders (16) verschwenkbar ist, und daß zwischen dem Trennelement (T) und dem Andrückelement (L) eine mechanische Kopplung vorgesehen ist, um das Andrückelement (L) über das Trennelement (T) mittels des Arbeitszylinders (16) zu verstellen.

8. Rundballenpressenach Anspruch 7, **dadurch gekennzeichnet,** daß das Trennelement (T) seitliche, stationär gelagerte Schwenkarme (14) aufweist, an denen der Arbeitszylinder (16) angreift, und daß die Kopplung eine an wenigstens einem Trennelement-Schwenkarm (14) und an wenigstens einem Schwenkarm (8) des Andrückelements (L) angelenkte Druckstange (18) aufweist, die bei Bewegung des Trennelements (T) in die Ruhestellung (T1) das Andrückelement (L) aus der Ausgangsposition gegen eine Feder (20) in die Startposition (F2) verschwenkt, und bei einer Bewegung des Trennelementes (T) in die Trennstellung (T2) das Andrückelement (L) über einen Anschlag (19) in die Ausgangsposition (F1) verschwenkt, vorzugsweise gegen einen stationären Begrenzungsanschlag (41).

9. Rundballenpresse nach wenigstens einem der Ansprüche 1 bis 8, **dadurch gekennzeichnet,** daß eine Bindematerialrolle (C) in der Startvorrichtung (S) mit ihrem Umfang in etwa synchron mit dem Andrückelement und benachbart zu diesem zwecks direkten Drehantreibens an die Mitnehmerfläche andrückbar ist.

10. Rundballenpresse nach Anspruch 9, **dadurch gekennzeichnet,** daß eine Achse der Bindematerialrolle (C) in einem Rahmen (36) gelagert ist, der mittels des Verstellantriebs (V) bis zur Anlage des Umfangs des Bindematerialrolle (C) an der Mitnehmerfläche verstellbar ist.

11. Rundballenpresse nach wenigstens einem der vorhergehenden Ansprüche, **dadurch gekennzeichnet,** daß die Kopplung eine erste Druckstange (18a) zwischen dem Trennelement-Schwenkarm (14) und dem Rahmen (36) und eine zweite Druckstange (18b) zwischen dem Rahmen (36) und dem Andrückelement-Schwenkarm (8) aufweist, wobei vorzugsweise die erste Druckstange (18a) in Schwenkrichtung der Bindematerialrolle (C) zur Mitnehmerfläche mit einem festen Anschlag (19) und entgegengesetzt über eine Feder (20) wirkt, und daß die zweite Druckstange (18b) in Schwenkrichtung der Bindematerialrolle (C) zur Mitnehmerfläche über eine Feder (20a) und in entgegengesetzter Richtung mit einem festen Anschlag (19a) wirkt.

12. Rundballenpresse nach den Ansprüchen 2 oder 3, **dadurch gekennzeichnet,** daß die Klemmkante (31) eine Randkante eines Blechstreifens ist, daß die Quernut (21) von einem Nutgrund (27) ausgehend divergierende Nutwände (28, 29) besitzt, deren Abstand im Bereich des Nutgrundes (27) kleiner ist als die Dicke des Blechstreifens, und daß eine Nutwand (29) in einem stumpfen oder schneidenartigen Umlenkrand (30) endet.

13. Rundballenpresse nach wenigstens einem der Ansprüche 1 bis 12, **dadurch gekennzeichnet,** daß in etwa in Verlängerung der Andruckfläche (F) eine der Bewegungsrichtung der Mitnehmerfläche in Richtung zu einer Einführöffnung (6) zur Preßkammer (K) folgende Führung (G) für das von der Andruckfläche (F) an die Mitnehmerfläche angedrückte Bindematerial (M) vorgesehen ist, vorzugsweise ein gekrümmtes oder abgekantetes Leitblech (24, 25'), die, zumindest bereichsweise, zwischen einer das Bindematerial (M) an der Mitnehmerfläche haltenden Führstellung (G1) und einer abgehobenen Stellung (G2) verstellbar ist, und daß eine Führungs-Verstelleinrichtung (36) vorgesehen ist.

14. Rundballenpresse nach wenigstens einem der Ansprüche 1 bis 13, **dadurch gekennzeichnet,** daß im Weg des Bindematerials (M) zwischen der Bindematerialrolle (C) und dem Andrückelement (L) eine Breitstreckvorrichtung (D) für das Bindematerial (M) vorgesehen ist.

15. Rundballenpresse nach Anspruch 14, **dadurch gekennzeichnet,** daß die Breitstreckvorrichtung (D) einen quer zur Zuführrichtung des Bindematerials (M) verlaufenden Umlenkrand (38) am Andrückelement (L) aufweist, dessen außenliegende Endbereiche (39) in Bewegungsrichtung der Mitnehmerfläche gegenüber dem Mittelbereich des Umlenkrandes (38) schräg oder gerundet zurückweichen.

16. Rundballenpresse nach wenigstens einem der Ansprüche 1 bis 15, **dadurch gekennzeichnet,** daß in zumindest einem Endbereich des Andrückelementes (L); vorzugsweise bei einem Umlenkelement (7) bzw. einem Umlenkrand (38), ein Führungsvorsprung (40) für das Bindematerial vorgesehen ist.

## Claims

1. Roll baler (R), having a pressing chamber (K), which is defined by drivable pressing elements (P), such as pressure rollers (22) or pressure belts (4), and a binding apparatus (B) for binding the rolled bale (BA) in web-like binding material (M), the binding apparatus (B) having a starting apparatus (S), which is displaceable between a starting position (F2) and an initial position (F1), and in which starting apparatus are provided a pressure-applying element (L), with a pressure application surface (F), and a severing element (T), of which component parts the pressure-applying element (L), in the starting position (F2) of the starting apparatus (S), presses the binding material (M) directly against an entrainment surface of a pressing element (P) with the pressure application surface (F) to introduce a binding operation, while, in the initial position (F1), the pressure application surface (F) is raised from the entrainment surface of the pressing element (P), and of which component parts the severing element (T) is displaceable, by means of a drive, relative to the pressure-applying element (L) between an inoperative position (T1) and a severing position (T2), **characterised in that** the severing element (T) is mounted on the side of the pressure-applying element (L) remote from the entrainment surface and, in its severing position (T2), when viewed with respect to the direction of conveyance of the binding material (M), said severing element overlaps the pressure-applying element (L) and the binding material (M) lying thereon, and in that, in the severing position (T2), the severing element (T) can be brought to co-operate with the pressure-applying element (L) in a force-locking manner.

2. Roll baler according to claim 1, **characterised in that** the severing element (T) forms a covering element for the binding material (M), which covering element overlaps the pressure application surface (F) from above in the severing position (T2), and in that a cutting or clamping edge (31) is disposed on the severing element (T), preferably at the lower edge (13) thereof.

3. Roll baler according to claim 2, **characterised in that** a transversely lying supporting member (21) for the cutting or clamping edge (31) is provided on the pressure-applying element (L), and in that the supporting member (21) is an approximately V-shaped transverse groove (26), which opens in the opposite direction to the direction of movement of the entrainment surface.

4. Roll baler according to claim 1, **characterised in that** the pressure application surface (F) is mounted so as to be displaceable, at least over a limited range of movement, substantially in the direction of movement of the entrainment surface.

5. Roll baler according to at least one of claims 1 to 4, **characterised in that** the pressing elements (B) are a plurality of pressing belts (4), which are mounted adjacent one another on supporting rollers (3), said belts preferably being frictionally active, and said belts forming the entrainment surface which lies opposite the pressure application surface and extends substantially rectilinearly, and in that the pressure application surface (F) is slightly convex when viewed relative to the entrainment surface and with respect to the direction of the pressing chamber axis.

6. Roll baler according to claim 1, **characterised in that** the pressure-applying element (L) is a torsion-resistant cross-piece member (11), which is preferably formed from at least one sheet metal plate (12), and which extends between two lateral pivotal arms (8), which are mounted in a stationary manner, and in that a pivotal displacement drive (V) co-operates directly or indirectly with at least one pivotal arm (8) or the transverse support (11).

7. Roll baler according to claim 1, **characterised in that** the severing element (T) is pivotable by means of a working cylinder (16), and in that a mechanical coupling is provided between the severing element (T) and the pressure-applying element (L) in order to displace the pressure-applying element (L) over the severing element (T) by means of the working cylinder (16).

8. Roll baler according to claim 7, **characterised in that** the severing element (T) includes lateral pivotal arms (14), which are mounted in a stationary manner, and with which arms the working cylinder (16) co-operates, and in that the coupling includes a pressing rod (18), which is pivotally mounted on at least one severing element pivotal arm (14) and on at least one pivotal arm (8) of the pressure-applying element (L), and which rod, upon the severing element (T) moving into the inoperative position (T1), pivots the pressure-applying element (L) from the initial position, in opposition to a spring (20), into the starting position (F2), and, upon the severing element (T) moving into the severing position (T2), pivots the pressure-applying element (L) into the initial position (Fl) via a stop member (19), preferably against a stationary defining stop member (41).

9. Roll baler according to at least one of claims 1 to 8, **characterised in that** a roll of binding material (C) in the starting apparatus (S) can be pressed against the entrainment surface with its circumference substantially synchronously with the pressure-applying element and adjacently thereto for the purpose of achieving a direct rotary driving operation.

10. Roll baler according to claim 9, **characterised in that** one spindle of the roll of binding material (C) is mounted in a frame (36), which is displaceable by means of the displacement drive (V) until the circumference of the roll of binding material (C) abuts against the entrainment surface.

11. Roll baler according to at least one of the preceding claims, **characterised in that** the coupling has a first pressing rod (18a) between the severing element pivotal arm (14) and the frame (36) and a second pressing rod (18b) between the frame (36) and the pressure-applying element pivotal arm (8), the first pressing rod (18a) preferably acting in the pivotal direction of the roll of binding material (C) relative to the entrainment surface with a fixed stop member (19) and in the opposite direction via a spring (20), and in that the second pressing rod (18b) acts in the pivotal direction of the roll of binding material (C) relative to the entrainment surface via a spring (20a) and in the opposite direction with a fixed stop member (19a).

12. Roll baler according to claims 2 or 3, **characterised in that** the clamping edge (31) is a marginal edge of a sheet metal strip, in that the transverse groove (21) has divergent groove walls (28, 29) extending from a groove base (27), the spacing between said walls being shorter in the region of the groove base (27) than the thickness of the sheet metal strip, and in that one groove wall (29) terminates in a blunt or blade-like deflecting edge (30).

13. Roll baler according to at least one of claims 1 to 12, **characterised in that** a guiding means (G), which follows the direction of movement of the entrainment surface towards an insert aperture (6) leading to the pressing chamber (K), is provided substantially in an extension of the pressure application surface (F) for the binding material (M) which has been pressed against the entrainment surface by the pressure application surface (F), said guiding means preferably being a curved or angled baffle plate (24, 25') and being displaceable, at least in various regions, between a guiding position (G1), which retains the binding material (M) on the entrainment surface, and a raised position (G2), and in that a guide displacement means (36) is provided.

14. Roll baler according to at least one of claims 1 to 13, **characterised in that** a broad-drawing apparatus (D) for the binding material (M) is provided in the path of the binding material (M) between the roll of binding material (C) and the pressure-applying element (L).

15. Roll baler according to claim 14, **characterised in that** the broad-drawing apparatus (D) includes a deflecting edge (38) on the pressure-applying element (L), which edge extends transversely relative to the feed direction of the binding material (M), the externally situated end regions (39) of said pressure-applying element being set back in an inclined or rounded manner relative to the central region of the deflecting edge (38) when viewed with respect to the direction of movement of the entrainment surface.

16. Roll baler according to at least one of claims 1 to 15, **characterised in that** a guiding projection member (40) for guiding the binding material is provided in at least one end region of the pressure-applying element (L), preferably when there is a deflecting element (7) or respectively a deflecting edge (38).

## Revendications

1. Presse à balles rondes (R), avec une chambre de pression (K) délimitée par des éléments de pression (P) aptes à être entraînés, comme des rouleaux de pression (22) ou des courroies de pression (4), et un dispositif de liage (B) pour lier la balle ronde (BA) dans un matériau de liage (M) en forme de bande, où le dispositif de liage (B) présente un dispositif de démarrage (S) déplaçable entre une position de démarrage (F2) et une position initiale (F1), dans lequel sont prévus un élément d'application (L) avec une face d'application (S) et un élément de séparation (T), dont l'élément d'application (L), en position de démarrage (F) du dispositif de démarrage (S) applique le matériau de liage (M) avec la face d'application (F) pour introduire l'opération de liage, directement à une face d'entraînement d'un élément de pression (P), tandis que dans la position initiale (F1), la face d'application (F) est relevée de la face d'entraînement de l'élément de pression (P), et dont l'élément de séparation (T) est déplaçable au moyen d'un dispositif d'entraînement relativement à l'élément d'application (L) entre une position de repos (T1) et une position de séparation (T2), **caractérisée en ce que** l'élément de séparation (T) est logé au côté de l'élément d'application (L) éloigné de la face d'entraînement et, dans sa position de séparation (T2) dans la direction de convoyage du matériau de liage (M), passe sur l'élément d'application (L) et le matériau de liage (M) reposant sur celui-ci, et en ce que l'élément de séparation (T) peut être amené dans la position de séparation (T2) à l'élément d'application (L) en une prise par force.

2. presse à balles rondes selon la revendication 1, **caractérisée en ce que** l'élément de séparation (T) forme dans la position de séparation (T2), un élément de recouvrement pour le matériau de liage (M), enjambant la face d'application (F2) de dessus, et en ce qu'il est disposé à l'élément de séparation (T), de préférence au bord inférieur (13) de celui-ci, une arête de coupe ou de serrage (31).

3. Presse à balles rondes selon la revendication 2, **caractérisée en ce qu**'il est prévu à l'élément d'application (L) une butée (21) s'étendant transversalement pour l'arête de coupe ou de serrage (31), et en ce que la butée (21) est une rainure transversale (26) approximativement en forme de V, s'ouvrant contrairement à la direction de déplacement de la face d'entraînement.

4. Presse à balles rondes selon la revendication 1, **caractérisée en ce que** la face d'application (F) est logée d'une manière déplaçable au moins sur une zone de déplacement limitée approximativement dans la direction de déplacement de la face d'entraînement.

5. Presse à balles rondes selon au moins l'une des revendications 1 à 4, **caractérisée en ce que** les éléments de pression (B) sont plusieurs courroies de pression juxtaposées (4), logées sur des rouleaux d'appui (3), de préférence actifs en frottement qui forment la face d'entraînement s'étendant d'une manière à peu près rectiligne, opposée à la face d'application, et en ce que la face d'application (F) est légèrement concave vers la face d'entraînement et vue en direction de l'axe de la chambre de compression.

6. Presse à balles rondes selon la revendication 1, **caractérisée en ce que** l'élément d'application (L) est un support transversale (11) rigide en torsion, de préférence en au moins une plaque en tôle (12) qui s'étend entre deux bras de pivotement latéraux (8), logés d'une manière stationnaire, et en ce que s'applique directement ou indirectement à au moins un bras de pivotement (8) ou au support transversal (11) une commande de déplacement pivotante (V).

7. Presse à balles rondes selon la revendication 1, **caractérisée en ce que** l'élément de séparation (T) peut être amené à pivoter au moyen d'un vérin de travail (16), et en ce qu'il est prévu entre l'élément de séparation (T) et l'élément d'application (L) un couplage mécanique pour déplacer l'élément d'application (L) par l'élément de séparation (T) au moyen du vérin de travail (16).

8. Presse à balles rondes selon la revendication 7, **caractérisée en ce que** l'élément de séparation (T) présente des bras de pivotement latéraux (14), logés d'une manière stationnaire, auxquels s'applique le vérin de travail (16), et en ce que le couplage présente une tige de pression (18) articulée à au moins un bras de pivotement (14) de l'élément de séparation et à au moins un bras de pivotement (8) de l'élément d'application (L) qui, lors d'un déplacement de l'élément de séparation (T) dans la position de repos (T1) fait pivoter l'élément d'application (L) de la position initiale contre un ressort (20) dans la position de démarrage (F2), et lors d'un déplacement de l'élément de séparation (T) dans la position de séparation (T2), fait pivoter l'élément d'application (L) par une butée (19) dans la position initiale (F1), de préférence contre une butée de délimitation stationnaire (41).

9. Presse à balles rondes selon au moins l'une des revendications 1 à 8, **caractérisée en ce qu**'un rouleau de matériau de liage (C), dans le dispositif de démarrage (S), est applicable avec son pourtour, d'une manière à peu près synchronisée avec l'élément d'application et au voisinage de celui-ci, en vue d'un entraînement en rotation directe, à la face d'entraînement.

10. Presse à balles rondes selon la revendication 9, **caractérisée en ce qu**'un axe du rouleau de matériau de liage (C) est logé dans un cadre (36) qui est déplaçable au moyen de la commande de déplacement (V) jusqu'à l'application du pourtour du rouleau de matériau de liage (C) à la face d'entraînement.

11. Presse à balles rondes selon au moins l'une des revendications précédentes, **caractérisée en ce que** l'accouplement présente une première tige de pression (18a) entre le bras de pivotement (14) de l'élément de séparation et le cadre (36), et une deuxième tige de pression (18b) entre le cadre (36) et le bras de pivotement (8) de l'élément d'application, où de préférence la première tige de pression (18a) agit dans la direction de pivotement du rouleau de matériau de liage (C) vers la face d'entraînement avec une butée fixe (19) et contrairement par un ressort (20), et en ce que la deuxième tige de pression (18b) agit dans la direction de pivotement du rouleau de matériau de liage (C) vers la face d'entraînement par un ressort (20a) et dans la direction opposée avec une butée fixe (19a).

12. Presse à balles rondes selon les revendications 2 ou 3, **caractérisée en ce que** l'arête de serrage (31) est une arête de bord d'une bande en tôle, en ce que la rainure transversale (21) possède des parois de rainure divergentes (28, 29) partant d'un fond de rainure (27), dont l'écart au voisinage du fond de rainure (27) est plus petit que l'épaisseur de la bande en tôle, et en ce qu'une paroi de rainure (29) se termine par un bord de renvoi émoussé ou tranchant (30).

13. Presse à balles rondes selon au moins l'une des revendications 1 à 12, **caractérisée en ce qu**'il est prévu, à peu près dans le prolongement de la face d'application (F), un guidage (G) suivant la direction de déplacement de la face d'entraînement en direction d'une ouverture d'insertion (6) vers la chambre de compression (K) pour le matériau de liage (M) appliqué par la face d'application (F) à la face d'entraînement, de préférence une tôle de guidage courbée ou pliée (24, 25') qui, au moins par zones, est déplaçable entre une position de guidage (G1) retenant le matériau de liage (M) à la face d'entraînement et une position relevée (G2), et en ce qu'il est prévu un dispositif de déplacement de guidage (36).

14. Presse à balles rondes selon au moins l'une des revendications 1 à 13, **caractérisée en ce qu**'il est prévu sur le chemin du matériau de liage (M) entre le rouleau de matériau de liage (C) et l'élément d'application (L) un dispositif d'extension en largeur (D) pour le matériau de liage (M).

15. Presse à balles rondes selon la revendication 14, **caractérisée en ce que** le dispositif d'extension en largeur (D) présente un bord de renvoi (38) à l'élément d'application (L) s'étendant transversalement à la direction d'amenée du matériau de liage (M), dont les zones d'extrémité (39) situées à l'extérieur reculent en biais ou en arrondi dans le sens de déplacement de la face d'entraînement par rapport à la zone médiane du bord de renvoi (38).

16. Presse à balles rondes selon au moins l'une des revendications 1 à 15, **caractérisée en ce qu**'il est prévu au moins dans une zone d'extrémité de l'élément d'application (L), de préférence à un élément de renvoi (7) respectivement un bord de renvoi (38), une saillie de guidage (40) pour le matériau de liage.
